# EUROPEAN PATENT APPLICATION

(11) **EP 1 862 679 A1**
(43) Date of publication of application: **05.12.2007**
(21) Application number: 06252835.1
(22) Date of filing: 01.06.2006
(51) Int. Cl.: F16B 27/00

(54) **Chain strip for guiding screws in an auto-locking screwdriver**

(71) Applicant: Huang, Shu-Ching, Kaohsiung City (TW)
(72) Inventor: Huang, Shu-Ching, Kaohsiung City (TW)
(74) Representative: Brown, Kenneth Richard

(57) **Abstract**

A chain strip for guiding screws in an auto-locking screwdriver comprises at least two papers (1,2), the two papers being adhered to one another intermittently, so as to form a plurality of holes (4) between the two papers, wherein screws can be installed in the holes. A first paper (1) of the at least two papers is a wave-like paper layer with protrusions. A second paper (2) of the at least two papers is also a wave-like paper which has a shape identical to the first paper. The first and second papers have a shape selected from semi-round shapes, rectangular shapes, cambered shapes, and trapezoidal shapes. Each connection area (3) has a driving hole for driving the chain strip to move. In use, two chain strips are arranged, and screws pass through the holes of the two chains.

## Description

### FIELD OF THE INVENTION

The present invention relates to screwdrivers, and in particular to a chain strip for guiding screws in an auto-locking screwdriver, wherein papers are used. At least two papers are adhered to one another intermittently, so as to form a plurality of holes between the two papers, wherein screws can be installed in the holes.

### BACKGROUND OF THE INVENTION

In the present invention, the chain strip for guiding screws in an auto-locking screwdriver is made of plastics. The cost is high. Thereby it will be deserted after used one time to induce the pollution of environment.

However in the prior art, the improvement of the chain strip for guiding screws in an auto-locking screwdriver is only one way for buckling and connections. The plastics are used. However this is uneconomic.

### SUMMARY OF THE INVENTION

Accordingly, the primary object of the present invention is to provide a chain strip for guiding screws in an auto-locking screwdriver, wherein papers are used. At least two papers are adhered to one another intermittently, so as to form a plurality of holes between the two papers, wherein screws can be installed in the holes.

To achieve above objects, the present invention provides a chain strip for guiding screws in an auto-locking screwdriver which comprises at least two papers, the two papers being adhered to one another intermittently, so as to form a plurality of holes between the two papers, wherein screws can be installed in the holes. A first paper of the at least two papers is a wave-like paper strip with protrusions. A second paper of the at least two papers is also a wave-like paper which has a shape identical to the first paper. The first and second papers have a shape selected from semi-round shapes, rectangular shapes, cambered shapes, and trapezoidal shapes. Each connection area has a driving hole for driving the chain strip to move. In use, two chain strips are arranged, and screws pass through the holes of the two chains.

The various objects and advantages of the present invention will be more readily understood from the following detailed description when read in conjunction with the appended drawing.

### BRIEF DESCRIPTION OF THE DRAWINGS

Fig. 1 is a first embodiment of the present invention.
Fig. 2 is an elevational view of Fig. 1.
Fig. 3 is a partial enlarged view of Fig. 1.
Fig. 4 is an elevational view of Fig. 3.
Fig. 5 shows one application of the first embodiment.
Fig. 6 shows another application of the first embodiment.
Fig. 7 shows the second embodiment of the present invention.
Fig. 8 shows the elevational view of Fig. 7.
Fig. 9 is a partial enlarged view of Fig. 7.
Fig. 10 is an elevational view of Fig. 9.
Fig. 11 shows one application of the second embodiment.
Fig. 12 shows another application of the second embodiment.
Fig. 13 shows the third embodiment of the present invention.
Fig. 14 shows the elevational view of Fig. 13.
Fig. 15 is a partial enlarged view of Fig. 13.
Fig. 16 is an elevational view of Fig. 15.
Fig. 17 shows the fourth embodiment of the present invention.
Fig. 18 shows the fifth embodiment of the present invention.
Fig. 19 shows the sixth embodiment of the present invention.
Fig. 20 is an elevational view of Fig. 10.
Fig. 21 is a seventh embodiment of the present invention.
Fig. 22 is an elevational view of Fig. 21.
Fig. 23 is an eighth embodiment of the present invention.
Fig. 24 is a ninth embodiment of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

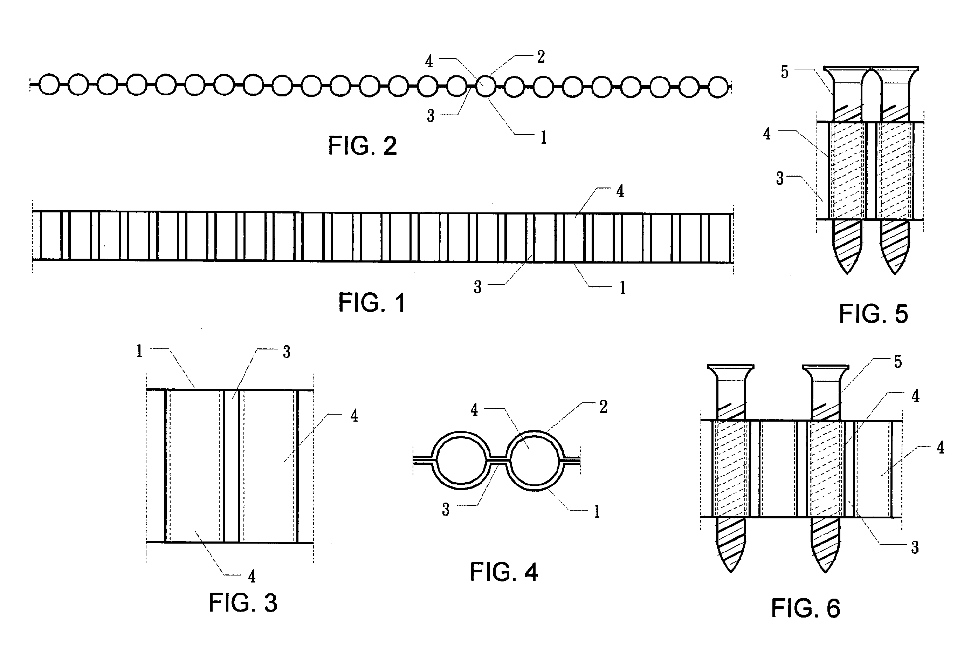

Referring to Figs. 1 to 4, the first embodiment of the present invention is illustrated. The present invention has the following elements.

A chain strip made of papers. The chain strip includes two wave-like paper layers 1, 2. Each wave-like paper layer 1, 2 has a plurality of semi-round protrusions. The two wave-like paper layers 1, 2 are adhered to one another so that the semi-round protrusions of the two wave-like paper layers 1, 2 are aligned to form a plurality of holes 4. The areas between holes are formed as connection areas 3. Referring to Fig. 5, the screws 5 can be installed in the holes 4 continuously. Referring to Fig. 6, the screws 5 can be installed with an interval.

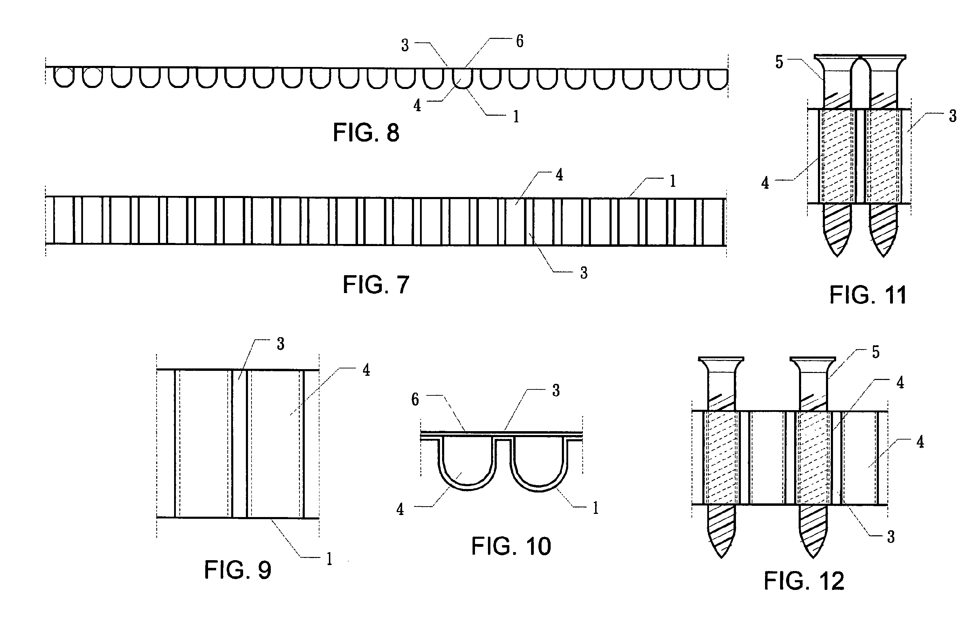

Referring to Figs. 7 to 10, the second embodiment of the present invention is illustrated. The chain strip includes one wave-like paper layer 1 and one plane paper layer 6. The wave-like paper layers 1, 2 has a plurality of semi-round protrusions. The wave-like paper layers 1 and the plane paper layer 6 are adhered to one another so as to form a plurality of semi-holes 4. The areas between holes are formed as connection areas 3. Referring to Fig. 11, the screws 5 can be installed in the holes 4 continuously. Referring to Fig. 12, the screws 5 can be installed with an interval.

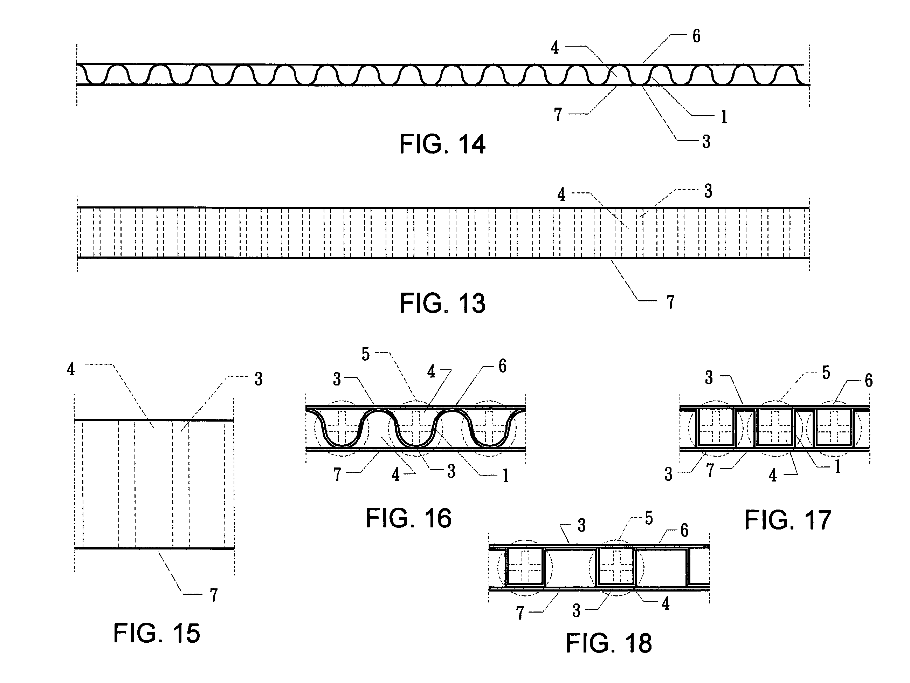

Referring to Figs. 13 to 16, the second embodiment of the present invention is illustrated. The chain strip includes one wave-like paper layer 1 and two plane paper layers 6, 7. The wave-like paper layer 1, 2 has a plurality of semi-round protrusions. The wave-like paper layers 1 is installed between the two plane paper layers 6, 7 so as to form a plurality of semi-holes 4 which are adjacent to one another. The connections of the wave-like paper layer 1 and the plane paper layers 6, 7 are formed as connection areas 3. Referring to Fig. 16, in use, the screws 5 can be installed discontinuously. Referring to Figs. 17, 18, it is illustrated that the wave-like paper layer 1 has rectangular protrusions instead of semi-round holes.

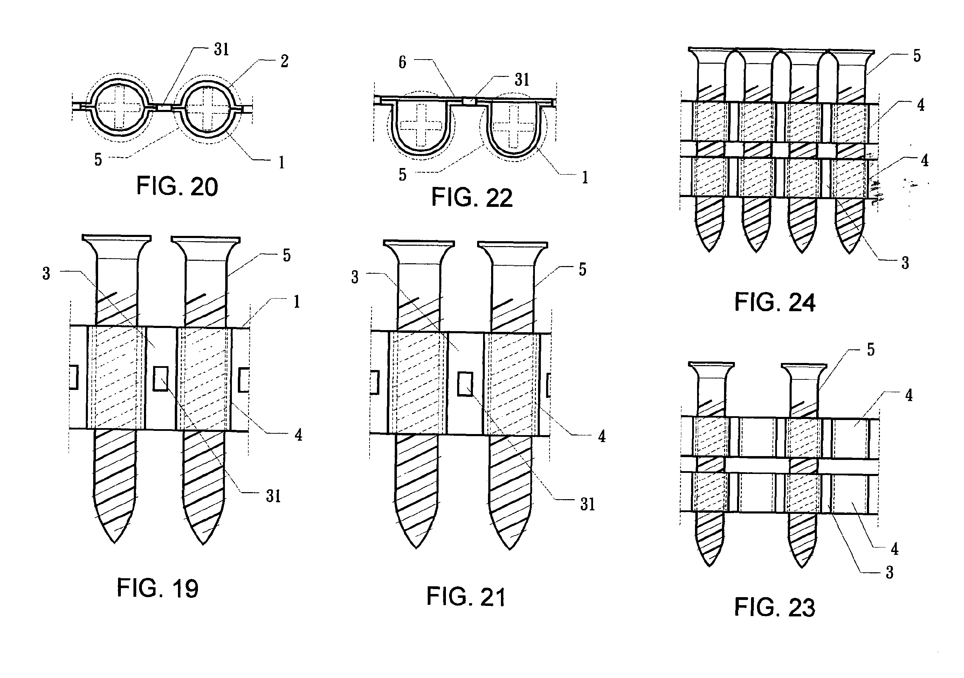

Referring to Figs. 19, 21, 22, it is illustrated that in the first and second embodiments, the connection areas 3 can be formed with rectangular driving holes 31 for driving the chain strip.

Referring to Figs. 23, 25, in the present invention, two chain strips can be arranged parallel, so that the screws 5 passes through the holes of two chain strips. No driving hole is necessary.

Furthermore, in the present invention, the protrusions in the wave-like paper layer 1 may have other shapes, such as trapezoidal shapes, cambered shapes, etc.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A chain strip for guiding screws in an auto-locking screwdriver comprising:
at least two papers, the two papers being adhered to one another intermittently, so as to form a plurality of holes between the two papers, areas connected two holes being formed as connection areas; wherein screws can be installed in the holes.

2. The chain strip for guiding screws in an auto-locking screwdriver as claimed in claim 1, where a first paper of the at least two papers is a wave-like paper layer with protrusions.

3. The chain strip for guiding screws in an auto-locking screwdriver as claimed in claim 2, wherein the first paper has a shape selected from semi-round shapes, rectangular shapes, cambered shapes, and trapezoidal shapes.

4. The chain strip for guiding screws in an auto-locking screwdriver as claimed in claim 1, wherein a second paper of the at least two papers is also a wave-like paper which has a shape identical to the first paper.

5. The chain strip for guiding screws in an auto-locking screwdriver as claimed in claim 4, wherein the first and second papers have a shape selected from semi-round shapes, rectangular shapes, cambered shapes, and trapezoidal shapes.

6. The chain strip for guiding screws in an auto-locking screwdriver as claimed in claim 1, wherein each connection area has a driving hole for driving the chain strip to move.

7. The chain strip for guiding screws in an auto-locking screwdriver as claimed in claim 4, wherein each connection area has a driving hole for driving the chain strip to move.

8. The chain strip for guiding screws in an auto-locking screwdriver as claimed in claim 1, wherein two chain strips are arranged, screws pass through the holes of the two chains.
